# EUROPEAN PATENT APPLICATION

(11) **EP 4 141 746 A1**
(43) Date of publication of application: **01.03.2023**
(21) Application number: 22177788.1
(22) Date of filing: 08.06.2022
(51) Int. Cl.: G06N 3/04, G06N 3/08, G06N 20/00

(54) **MACHINE LEARNING PROGRAM, METHOD OF MACHINE LEARNING, AND MACHINE LEARNING APPARATUS**

(30) Priority: 23.08.2021 JP 2021135599
(71) Applicant: FUJITSU LIMITED, Kawasaki-shi, Kanagawa 211-8588 (JP)
(72) Inventor: Watanabe, Shunichi, Kawasaki-shi, Kanagawa, 211-8588 (JP)
(74) Representative: Hoffmann Eitle

(57) **Abstract**

A machine learning program including instructions which, when the machine learning program is executed by a computer, cause the computer to execute processing, the processing including: clustering a plurality of pieces of data based on a plurality of feature amounts of the plurality of pieces of data obtained by inputting the plurality of pieces of data to a machine learning model, the clustering being performed under a condition that permits classification into a plurality of groups which are used as a correct answer label of training data and an other group which is not used as the correct answer label; generating the training data in which the correct answer label is assigned to the plurality of pieces of data based on a result of the clustering; and executing training of the machine learning model based on the generated training data.

## Description

### FIELD

The embodiment discussed herein is related to machine learning.

### BACKGROUND

A business operation using machine learning is performed in the following procedure. First, training data is prepared and machine learning is repeated, thereby to create a machine learning model for use in business. The training data is also referred to as teacher data. Operation data used in business is input to the created machine learning model, and a prediction result is output. However, while the machine learning model continues to be used in business, the external environment may change over time. This may change the tendency of the operation data input to the machine learning model to a different tendency from the tendency of the training data used for training of the machine learning model. As a result, inference accuracy of the machine learning model is degraded due to, for example, the difference between the operation data and the training data at the time of development of the machine learning model and a change in a statistical tendency of operation data input at the time of operation. Accordingly, techniques for addressing such degradation of the inference accuracy of a machine learning model have been developed.

For example, a technique has been proposed in which automatic accuracy recovery of a machine learning model is attempted in accordance with operation data input at the time of operation. According to this technique, the automatic accuracy recovery is attempted in the following procedure. For example, operation data input at the time of operation is represented in a data space. The operation data represented in the data space is separated by a boundary line called a decision boundary by the machine learning model. Next, the operation data represented in the data space is projected to a feature amount space that is a mathematical space in which the feature of data distribution is represented as a data group to capture the data group formed by the operation data as shapes to track changes. Then, a classification result of the operation data projected in the feature amount space is labeled with a pseudolabel for the operation data represented in the data space. Then, retraining by using the labeled operation data is performed so as to perform the automatic accuracy recovery of the machine learning model. The pseudolabel is, for example, a correct answer label assigned to unlabeled data by estimation.

According to such an automatic recovery technique using the feature amount space, density-based clustering using an anchor is performed, and retraining is performed before each cluster crosses the decision boundary by using data tracking, thereby to ensure that deformation of the shape of the data group in the feature amount space is minimized. By securing the shape of the data group in the feature amount space, the inference accuracy of the machine learning model is maintained.

There is a technique in which a plurality of observations are divided into moving windows, training observations included in each moving window are learned to identify outlier candidates, learning is performed using non-outlier training observations, and a model is created for data that changes as time elapses. There is a technique in which a pseudolabel is created based on a noise model indicating a likelihood of a label for a label having uncertainty, and learning is performed using the pseudolabel at the next epoch.

U. S. Patent Application Publication Nos. 2020/0034692 and 2019/0354857 are disclosed as related art.

### SUMMARY

### TECHNICAL PROBLEM

However, in the automatic recovery technique of related art using the feature amount space, retraining is sequentially performed before the clusters cross the decision boundary. Thus, a change amount which is also referred to as a drift that may be addressed has a small change width at a time. Accordingly, in a case where an abrupt change occurs in the operation data, the data tracking may fail, leading to accuracy degradation of the machine learning model. For example, in a case where a change between the data at the time of training and the data at the time of operation is large, the data tracking is not necessarily successful, leading to accuracy degradation of the machine learning model.

In the related art in which the training observations included in the moving windows are learned to identify the outlier candidates, and the learning is performed using the non-outlier training observations, the outliers are simply excluded. Thus, appropriate adjustment of a data tracking width in accordance with a change in data may be difficult. In the related art in which the pseudolabel is created based on the noise model indicating the label likelihood for the label having uncertainty, a change in data over time is not considered. Thus, appropriate adjustment of the data tracking width in accordance with a change in data may be difficult. Accordingly, even when any of the above-described techniques of related art is used, it is difficult to decrease the degradation of the inference accuracy of the machine learning model in a case where data changes over time.

The disclosed technique is developed in consideration of the above-described situation, and an object of the disclosed technique is to provide a machine learning program, a method of machine learning, and a machine learning apparatus that improve inference accuracy of a machine learning model.

### SOLUTION TO PROBLEM

According to an aspect of the embodiments, there is a provided a machine learning program including instructions which, when the machine learning program is executed by a computer, cause the computer to execute processing, the processing including: clustering a plurality of pieces of data based on a plurality of feature amounts of the plurality of pieces of data obtained by inputting the plurality of pieces of data to a machine learning model, the clustering being performed under a condition that permits classification into a plurality of groups which are used as a correct answer label of training data and an other group which is not used as the correct answer label; generating the training data in which the correct answer label is assigned to the plurality of pieces of data based on a result of the clustering; and executing training of the machine learning model based on the generated training data.

### ADVANTAGEOUS EFFECT OF INVENTION

In one aspect, the present disclosure may improve the inference accuracy of the machine learning model.

### BRIEF DESCRIPTION OF DRAWINGS

FIG. 1 is a block diagram of a machine learning apparatus according to an embodiment;
FIG. 2 is a diagram illustrating an overview of automatic accuracy recovery of a machine learning model by retraining with easily trackable operation data;
FIG. 3 is a diagram illustrating class detection results in a case of responding to an unknown class and in a case of not responding to an unknown class;
FIG. 4 is a flowchart of an automatic accuracy recovery process for the machine learning model performed by the machine learning apparatus according to the embodiment;
FIG. 5 is a diagram illustrating a comparison between precision recall (PR) curves on a batch-by-batch basis; and
FIG. 6 is a hardware configuration diagram of the machine learning apparatus.

### DESCRIPTION OF EMBODIMENTS

Hereinafter, an embodiment of a machine learning program, a method of machine learning, and a machine learning apparatus disclosed in this disclosure will be described in detail with reference to the drawings. The following embodiment is not intended to limit the machine learning program, the method of machine learning, and the machine learning apparatus disclosed in this disclosure.

### [Embodiment 1]

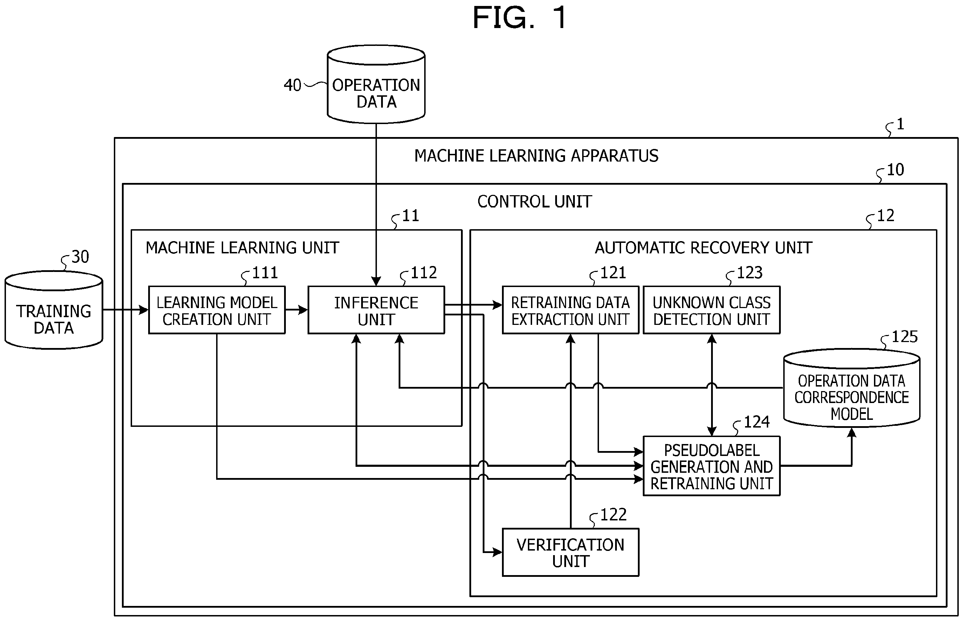

FIG. 1 is a block diagram of a machine learning apparatus according to the embodiment. As illustrated in FIG. 1, a machine learning apparatus 1 according to the present embodiment includes a control unit 10 including a machine learning unit 11 and an automatic recovery unit 12.

Training data 30 is teacher data in which input data and an output result exist. A large number of pieces of the training data 30 exist and form a data set. Operation data 40 is data used in a business operation. The operation data 40 is input data whose output is unknown. Also, a large number of pieces of the operation data 40 exist and form a data set.

After a machine learning model has been created by using machine learning, an automatic model recovery unit 11 performs inference by using the created machine learning model. The automatic model recovery unit 11 includes a learning model creation unit 111 and an inference unit 112.

The learning model creation unit 111 performs machine learning by using the training data 30 and creates a trained machine learning model.

It may be said that the pieces of the training data 30 have respective feature amounts and are disposed in a data space representative of the respective feature amounts. By training a machine learning model, the learning model creation unit 111 creates a machine learning model having the decision boundary for classifying the pieces of the training data 30 disposed in the data space into a plurality of classes. For example, it may be said that the learning model creation unit 111 creates a machine learning model for determining into which classes the pieces of the operation data 40 are classified by using the decision boundary. The learning model creation unit 111 outputs the created trained machine learning model to the inference unit 112. This model created by the learning model creation unit 111 is an example of an "other machine learning model".

The inference unit 112 receives input of the trained machine learning model from the learning model creation unit 111. By using the obtained machine learning model, the inference unit 112 performs inference on the input operation data 40. The inference unit 112 notifies a user of an inference result by, for example, transmitting the inference result to a user terminal (not illustrated) or the like.

The inference unit 112 outputs the inference result to a pseudolabel generation and retraining unit 124. Then, upon receiving input of the machine learning model updated by retraining from the pseudolabel generation and retraining unit 124, the inference unit 112 performs inference by using the updated machine learning model. For example, by using the sequentially updated machine learning model, the inference unit 112 performs inference on the operation data.

In a case where automatic recovery is performed by the automatic recovery unit 12, which will be described later, when the machine learning model is degraded due to a large change in the operation data 40, the inference unit 112 performs inference on the operation data 40 by using a generated operation data correspondence model 125. In this case, the inference unit 112 notifies the user of the inference result by, for example, transmitting the inference result to an external device (not illustrated) or the like and outputs the inference result to a verification unit 122.

With clustering in a feature amount space, the automatic recovery unit 12 tracks a change in the feature amount of input data in operation so as to maintain inference accuracy of the machine learning model. In a case of degradation, due to a large change in the operation data, of the inference accuracy of the machine learning model for which automatic recovery is performed by the automatic recovery function by tracking the data, the automatic recovery unit 12 extracts the operation data 40 with high tracking easiness in the feature amount space and adds a pseudolabel to perform retraining. With the clustering, a cluster is generated which is not associated with a class included as a correct answer label of the training data, for example, a class output by inference of the machine learning model. This cluster not associated with the class included as the correct answer label of the training data is referred to as an "unknown class". In a case where an unknown class is generated, the automatic recovery unit 12 assigns a pseudolabel to this unknown class, uses the unknown class for retraining, and updates the machine learning model. Accordingly, in a case where it becomes difficult, due to the occurrence of a large change in the operation data, to perform automatic recovery by retraining with the data tracking before crossing of the decision boundary, tracking corresponding to the large change may be performed and the inference accuracy of the machine learning model may be maintained. For example, the processing of the automatic recovery unit 12 may enable tracking of a larger change than a change trackable by the automatic recovery based on a pseudolabel assigned by clustering that does not permit the unknown class.

Hereinafter, the details of the automatic recovery unit 12 will be described. As illustrated in FIG. 1, the automatic recovery unit 12 includes a retraining data extraction unit 121, the verification unit 122, an unknown class detection unit 123, and the pseudolabel generation and retraining unit 124.

In a case where it is determined that the inference accuracy of the machine learning model is degraded based on a degradation determination of the inference accuracy of the machine learning model by the verification unit 122 using the inference result of the inference unit 112 of the automatic model recovery unit 11, the retraining data extraction unit 121 receives a notification of the degradation of the inference accuracy from the verification unit 122. Accordingly, retraining processing with enlarged data tracking in the case where the operation data 40 is largely changed, which will be described later, is started. In addition, the retraining data extraction unit 121 may receive, from an administrator terminal (not illustrated) or the like, input of a notification of degradation of the inference accuracy of the machine learning model used for inference by the inference unit 112 of the machine learning unit 11.

The retraining data extraction unit 121 obtains from the administrator terminal a correct answer label for part of the operation data 40 for which the correct answer label is available out of the operation data 40 for which the inference is performed by the inference unit 112. This operation data 40 for which the inference is performed by the inference unit 112 is an example of "a plurality of pieces of data".

The retraining data extraction unit 121 obtains, from the inference unit 112, the inference result for part of the operation data 40 for which the correct answer label has been obtained. Next, the training data extraction unit 121 compares the inference result with the correct answer label and identifies the operation data 40 for which the inference result matches the correct answer label. The training data extraction unit 121 estimates that the operation data 40 able to be correctly answered by the inference as data having high tracking easiness in the feature amount space. Next, the training data extraction unit 121 outputs the operation data 40 estimated as the data having high tracking easiness in the feature amount space and the correct answer label thereof to the pseudolabel generation and retraining unit 124 together with the machine learning model. Hereinafter, the operation data 40 estimated, by the training data extraction unit 121, to have high tracking easiness in the feature amount space is referred to as "easily trackable operation data". This easily trackable operation data is an example of "correct answer data output of which in a case of being input to the machine learning model matches a correct answer label".

Then, when the inference accuracy of the operation data correspondence model 125 is degraded again due to a large change in the operation data 40, the training data extraction unit 121 receives an instruction to execute retraining from the verification unit 122. The training data extraction unit 121 obtains the correct answer label of part of the operation data 40, compares the obtained correct answer label with the inference result, identifies the operation data 40 for which the inference result matches the correct answer label, and outputs the identified operation data 40 as the easily trackable operation data to the pseudolabel generation and retraining unit 124.

When training of the machine learning model by the learning model creation unit 111 is completed, the pseudolabel generation and retraining unit 124 obtains the training data 30 and the trained machine learning model from the learning model creation unit 111. The pseudolabel generation and retraining unit 124 projects each piece of the training data 30 disposed in the data space to a feature amount space which is a mathematical space indicative of the feature amount of the data. For example, the pseudolabel generation and retraining unit 124 uses a function that extracts the feature amount of the training data 30 included in each class in the data space and projects each piece of training data 30 to the feature amount space to convert the training data 30 into vectors. As a result, since the feature amounts of the pieces of the training data 30 of the same class are close to each other, the pieces of the training data 30 are represented as the vectors the positions of which are collected in the feature amount space. Accordingly, the pseudolabel generation and retraining unit 124 may collectively represent, in the low-dimensional feature amount space, the training data 30 represented in the high-dimensional data space.

In this projection to the feature amount space, in a case where the machine learning model is a neural network, values calculated up to the last layer or a particular layer before the last layer of the trained neural network are used as the feature amounts of the data. For example, the projection is performed by inputting the data to the neural network and causing the neural network to calculate in forward propagation to obtain the feature amounts of the data. The vectors representing the obtained feature amounts and the space for disposition are the feature amount space. For example, it may be said that the pseudolabel generation and retraining unit 124 projects the data to the feature amount space based on a parameter of the trained machine learning model.

Next, the pseudolabel generation and retraining unit 124 performs density-based clustering on the training data 30 represented in the feature amount space to determine data groups (clusters) in the feature amount space. Next, the pseudolabel generation and retraining unit 124 identifies a data group in the feature amount space corresponding to each class in the data space. The pseudolabel generation and retraining unit 124 sets the correct answer label of each class in the data space as the correct answer label of a corresponding one of the data groups in the feature amount space. For example, in this stage, the pseudolabel generation and retraining unit 124 only checks the correspondence between the data groups corresponding to the respective clusters of the training data 30 projected to the feature amount space and the classes indicated by the correct answer labels.

Then, when entering an operation stage of the machine learning model, the pseudolabel generation and retraining unit 124 obtains the operation data 40 having been used for the inference from the inference unit 112. Next, the pseudolabel generation and retraining unit 124 projects the obtained operation data 40 from the data space to the feature amount space. The pseudolabel generation and retraining unit 124 performs clustering of the operation data 40 in the feature amount space, identifies classes corresponding to the generated clusters, and determines the pseudolabels. Next, the pseudolabel generation and retraining unit 124 generates training data for retraining by labeling the operation data with the results of the clustering as the pseudolabels and executes the retraining of the machine learning model. Thus, the pseudolabel generation and retraining unit 124 creates a new machine learning model having the updated decision boundary in the data space. The pseudolabel generation and retraining unit 124 outputs the machine learning model updated by the retraining to the inference unit 112. In this way, the pseudolabel generation and retraining unit 124 automatically recovers the machine learning model to ensure the inference accuracy. Also, the pseudolabel generation and retraining unit 124 may determine the accuracy by comparing the pseudolabels assigned to the respective clusters with the inference results.

The above-described normal automatic recovery of the machine learning model performed by the pseudolabel generation and retraining unit 124 using the operation data is referred to as "retraining by data tracking before crossing of the decidable boundary" herein. Although the pseudolabel generation and retraining unit 124 performs retraining by data tracking before crossing of the decidable boundary, there may be a case where the operation data changes to such a degree that estimation accuracy is not necessarily ensured by the automatic recovery by this. In this case, the pseudolabel generation and retraining unit 124 executes the following retraining of the machine learning model.

In a case where it is determined, by the verification unit 122, that the inference accuracy of the machine learning model has been degraded, the pseudolabel generation and retraining unit 124 receives, from the training data extraction unit 121, the easily trackable operation data and the input of the machine learning model having been used for the inference by the inference unit 112. The pseudolabel generation and retraining unit 124 projects the easily trackable operation data represented in the data space to the low-dimensional feature amount space which is a mathematical space in which the feature of data distribution is represented as the data groups. Next, the pseudolabel generation and retraining unit 124 performs density-based clustering on the easily trackable operation data represented in the feature amount space to determine the data groups of the easily trackable operation data. Next, the pseudolabel generation and retraining unit 124 identifies, in the feature amount space, the data groups of the easily trackable operation data corresponding to respective classes in the data space.

The pseudolabel generation and retraining unit 124 sets the correct answer label of each class in the data space as the pseudolabel of a corresponding one of the data groups in the feature amount space. Next, the pseudolabel generation and retraining unit 124 generates training data for retraining by labeling the easily trackable operation data with the pseudolabel and executes the retraining of the machine learning model. Thus, the pseudolabel generation and retraining unit 124 creates the operation data correspondence model 125 as a new machine learning model having the updated decision boundary in the data space. As described above, in a case where the inference accuracy of the operation data correspondence model 125 is degraded due to, for example, an abrupt change in the operation data 40, the pseudolabel generation and retraining unit 124 performs retraining using the easily trackable operation data which is data having high tracking easiness in the feature amount space to recover the inference accuracy of the operation data correspondence model 125.

As described above, based on the parameter of the model which is an other machine learning model and which has been used for the inference by the inference unit 122, the pseudolabel generation and retraining unit 124 generates the operation data correspondence model 125 which is the machine learning model. The correct answer label that the pseudolabel generation and retraining unit 124 uses in the retraining is a group of classification results output by the model which is the other machine learning model and which has been used for the inference by the inference unit 122.

Pieces of the operation data 40 with which the inference has failed are considered to be pieces of data with which tracking and recognition are incorrect in the density-based clustering in the feature amount space of the machine learning model having been used for the inference at that time, and those pieces of the operation data 40 are highly likely to be noise in the retraining. Accordingly, the pseudolabel generation and retraining unit 124 performs noise-reduced retraining by using the easily trackable operation data that is the operation data 40 with which the inference has succeeded. Thus, in a case where a large change occurs in the operation data 40 and accuracy degradation occurs, the pseudolabel generation and retraining unit 124 may create the operation data correspondence model 125 in which the estimation accuracy is appropriately recovered.

As an other method, the pseudolabel generation and retraining unit 124 may perform retraining only on data used for the operation data 40 able to be correctly answered by the operation data correspondence model 125 out of the new operation data 40. This may decrease the cost related to the training. For example, when not all the new operation data 40 is used, the cost related to training may be decreased, and the cost of assigning correct answer label to the new operation data 40 may be decreased.

After automatic accuracy recovery of the operation data correspondence model 125 has been executed by the retraining using the pseudolabel generation and retraining unit 124 and the easily trackable operation data, the processing returns to the automatic accuracy recovery by the retraining using the data tracking before crossing of the decidable boundary. For example, the pseudolabel generation and retraining unit 124 obtains the operation data 40 having been used for the inference at the time of the operation from the inference unit 122. The pseudolabel generation and retraining unit 124 projects the obtained operation data 40 together with the data having been used for the previous training to the low-dimensional feature amount space. The pseudolabel generation and retraining unit 124 performs the retraining by using the clustering in the feature amount space, thereby recovering the inference accuracy of the operation data correspondence model 125.

Then, upon reception of notification of the accuracy degradation from the verification unit 122 due to, for example, an abrupt change in the operation data 40, the pseudolabel generation and retraining unit 124 performs the automatic accuracy recovery of the operation data correspondence model 125 by the retraining using the easily trackable operation data. Until receiving the notification of the accuracy degradation from the verification unit 122, the pseudolabel generation and retraining unit 124 performs the automatic accuracy recovery by the retraining using the data tracking before crossing of the decidable boundary and repeats the automatic accuracy recovery of the operation data correspondence model 125.

In a case where the density-based clustering of pieces of the data projected to the feature amount space is performed, the pseudolabel generation and retraining unit 124 permits generation of a data group to which the correct answer label is not assigned. For example, the pseudolabel generation and retraining unit 124 performs the clustering under the conditions that permit classification into the data groups which are assigned with the correct answer label and which are a plurality of groups used as the correct answer label and an unknown class which is an other group not used as the correct answer label. Accordingly, in some cases the unknown class may be generated.

In a case where the unknown class is generated, the pseudolabel generation and retraining unit 124 receives input of information on the unknown class from the unknown class detection unit 123. The pseudolabel generation and retraining unit 124 assigns a pseudolabel to the unknown class. For example, the following methods are conceivable for this assignment of the pseudolabel to the unknown class.

One of the assignment methods is based on a pseudolabel assignment state for the data other than the data of an unknown class. The pseudolabel generation and retraining unit 124 holds information on label types assumed at the time of training. In this case, the pseudolabel generation and retraining unit 124 refers to information on the label assigned to the classes estimated to be classes other than the unknown class. Compared to the label type assumed at the time of learning, the pseudolabel generation and retraining unit 124 assigns a label not allocated to the existing class as the pseudolabel of the unknown class.

An other pseudolabel assignment method is based on the distance from the data groups other than the unknown class. This is effective in a case where all the label types assumed at the time of learning have already been assigned to classes other than the unknown class. In this case, the pseudolabel generation and retraining unit 124 obtains a cluster center of each label type, compares the distance to the unknown class, and assigns the closest label type as the pseudolabel of the unknown class.

In this way, the pseudolabel generation and retraining unit 124 determines an other correct answer label for the unknown class and assigns the determined label based on the correct answer label having been assigned to the plurality of groups which are the data groups assigned with the correct answer label. The other correct answer label may be either the correct answer label other than the correct answer label having already been assigned to the data group or the correct answer label having already been assigned to the data group.

The pseudolabel generation and retraining unit 124 adds the unknown class as a new class in the data space and performs retraining of the operation data correspondence model 125 using the data tracking before crossing of the decidable boundary or retraining of the operation data correspondence model 125 using the easily trackable operation data.

For example, the automatic accuracy recovery of the operation data correspondence model 125 using the easily trackable operation data in the case of use of a new class to which an unknown class is added will be described. The pseudolabel generation and retraining unit 124 generates each class in the data space by adding an unknown class to which a pseudolabel is assigned to a known class to obtain data groups by projecting the classes to the feature amount space. The pseudolabel generation and retraining unit 124 extracts the easily trackable operation data in which the correct answer label matches the inference result from the operation data 40 having been used for the inference by the inference unit 122. Next, the pseudolabel generation and retraining unit 124 projects the easily trackable operation data to the low-dimensional feature amount space. Next, the pseudolabel generation and retraining unit 124 performs the density-based clustering on the easily trackable operation data represented in the feature amount space to determine the data groups of the easily trackable operation data. Next, the pseudolabel generation and retraining unit 124 identifies, in the feature amount space, the data groups of the easily trackable operation data corresponding to respective classes in the data space.

The pseudolabel generation and retraining unit 124 sets the correct answer label of each class in the data space as the pseudolabel of a corresponding one of the data groups in the feature amount space. The pseudolabel assigned to the unknown class is included in the correct answer label. Next, the pseudolabel generation and retraining unit 124 generates training data for retraining by labeling the easily trackable operation data with the pseudolabels including the pseudolabels assigned to the unknown classes and executes the retraining of the machine learning model. Thus, the pseudolabel generation and retraining unit 124 creates the operation data correspondence model 125 as a new machine learning model having the updated decision boundary for the classes including the unknown classes in the data space. As described above, even in the case where an unknown class is generated, the pseudolabel generation and retraining unit 124 performs the retraining with the pseudolabel assigned to the unknown class and recovers the inference accuracy of the operation data correspondence model 125.

The unknown class detection unit 123 obtains information on the operation data 40 projected to the feature amount space by the pseudolabel generation and retraining unit 124. From the distance between the data groups to which the correct answer label is assigned and the pieces of the data, the unknown class detection unit 123 detects the unknown class. Here, the data groups assigned with the correct answer label are examples of "a plurality of groups used as the correct answer label", and the unknown class is an example of "an other group not used as the correct answer label". For example, in a case where the operation data 40 exists at a position separated by greater than or equal to a predetermined distance from each of the data groups assigned with the correct answer label, the unknown class detection unit 123 determines that there is an unknown class. The unknown class detection unit 123 outputs the detected information on the unknown class to the pseudolabel generation and retraining unit 124.

The verification unit 122 receives input of the inference results from the inference unit 112. The verification unit 122 also receives input of the correct answer label of part of the operation data 40 from the administrator terminal (not illustrated) or the like. For the part of the operation data 40 for which the input of the correct answer label is received, the verification unit 122 compares the obtained correct answer label with the inference result. The verification unit 122 determines whether the inference accuracy is ensured for the operation data 40, for example, whether the inference accuracy is degraded. For example, in a case where the inference accuracy becomes smaller than or equal to a predetermined threshold, the verification unit 122 determines that the inference accuracy has been degraded. For example, when the error between the correct answer label and the inference result becomes greater than or equal to a predetermined ratio threshold, the verification unit 122 determines that the inference accuracy becomes smaller than or equal to the predetermined threshold and is degraded. The method of determining the degradation of the inference accuracy is not limited to this. For example, the verification unit 122 may determine that the inference accuracy is degraded in a case where the accuracy is degraded by greater than or equal to a threshold based on a comparison between the accuracy calculated last time and the accuracy calculated this time. When it has been determined that the inference accuracy is degraded, the verification unit 122 instructs the training data extraction unit 121 to execute retraining.

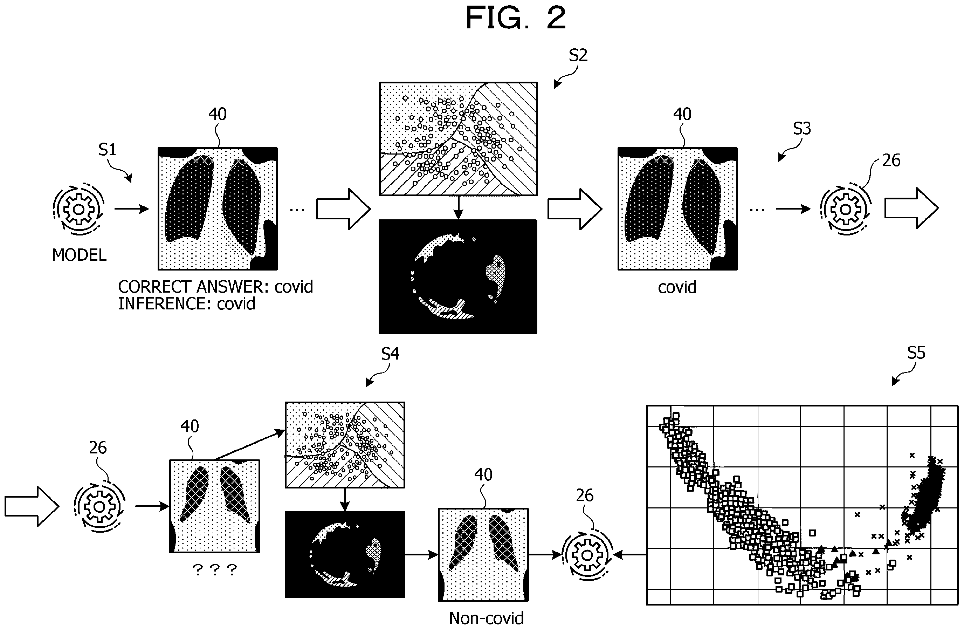

FIG. 2 is a diagram illustrating an overview of the automatic accuracy recovery of the machine learning model by retraining with easily trackable operation data. In the following description, an initial state is assumed to be a state in which a machine learning model has already been generated in the automatic model recovery unit 11 and the inference is performed while the automatic recovery is executed, and the inference accuracy of the machine learning model is degraded due to a large change in the operation data 40. Here, a case where whether a patient is infected with coronavirus disease (covid) is estimated by using a read image will be described.

A training data extraction unit 121 obtains, from the inference unit 112 of the machine learning model automatic recovery unit 11, the inference results for the operation data 40 which are read images. The training data extraction unit 121 also obtains the correct answer label of part of the operation data 40, for example, whether each of the read images is an image of a patient infected with covid. Next, the training data extraction unit 121 compares the correct answer label of part of the operation data 40 with the inference result (step S1).

The training data extraction unit 121 identifies the operation data 40 for which the inference result matches the correct answer label. Next, in the case where the identified operation data 40 is projected from the high-dimensional data space to the low-dimensional feature amount space, the training data extraction unit 121 estimates the identified operation data 40 as easily trackable operation data having high tracking easiness in the feature amount space (step S2).

Then, the training data extraction unit 121 outputs the easily trackable operation data to the pseudolabel generation and retraining unit 124 together with the machine learning model. By using the easily trackable operation data, the pseudolabel generation and retraining unit 124 retrains the machine learning model to generate the operation data correspondence model 125 (step S3).

Then, the pseudolabel generation and retraining unit 124 performs retraining with the data tracking before crossing of the decision boundary and performs the automatic accuracy recovery of the operation data correspondence model 125 (step S4). For example, the pseudolabel generation and retraining unit 124 performs clustering of the data group in the feature amount space and determines the pseudolabel of the operation data 40 as Non-covid based on the result of the clustering. The pseudolabel generation and retraining unit 124 assigns the pseudolabel of Non-covid to the operation data 40 to retrain the operation data correspondence model 125.

The unknown class detection unit 123 detects an unknown class by using the data group in the feature amount space generated by the pseudolabel generation and retraining unit 124. The pseudolabel generation and retraining unit 124 assigns the pseudolabel to the detected unknown class to use for the retraining (step S5).

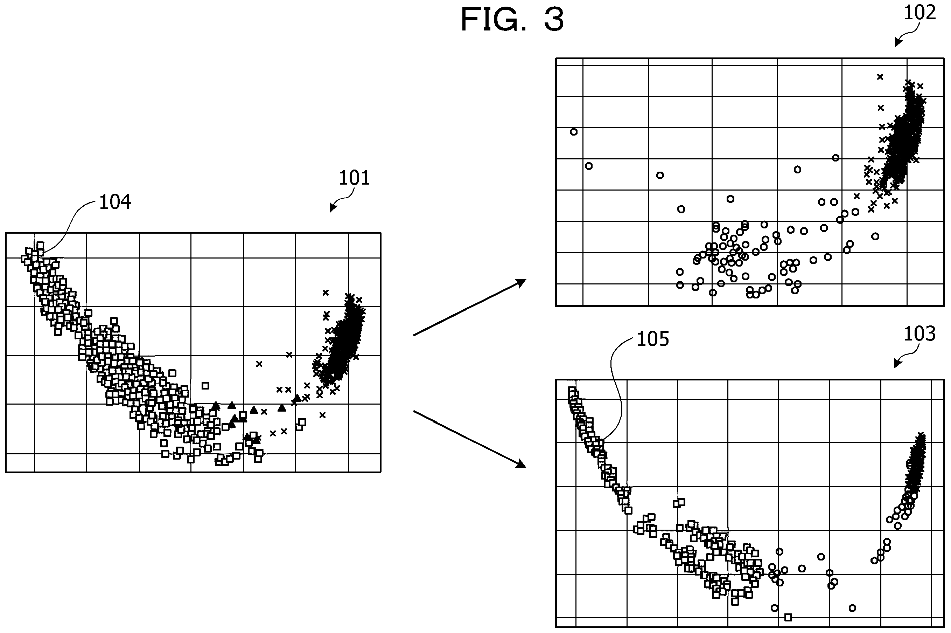

FIG. 3 is a diagram illustrating class detection results in a case of responding to and in a case of not responding to the unknown class. For example, as illustrated in a graph 101 of FIG. 3, a case where the data is disposed in the feature amount space and the unknown class detection unit 123 detects a data group 104 as an unknown class will be described.

In a case where the data group 104 is not used as the unknown class, the pseudolabel generation and retraining unit 124 handles the operation data 40 belonging to the data group 104 as data not belonging to any data group as illustrated in a graph 102. In contrast, in a case where the data group 104 is the unknown class and is handled as a new class, the pseudolabel generation and retraining unit 124 generates a new class to which the data group 105 that does not correspond to the existing class belongs as illustrated in a graph 103 and incorporates the new class into the retraining.

Since the correct answer of not all the pieces of the operation data 40 is used for the retraining in the automatic accuracy recovery of the machine learning model using the easily trackable operation data, the operation data 40 having a distribution different from that of the data used at the time of training of the current operation data correspondence model 125 is used. In this case, depending on the operation data 40, the inference result may differ from that with the operation data 40 having been used for the training so far. It may be said that these pieces of the operation data 40 are also a variation of the class having an original classification label. Accordingly, the pseudolabel generation and retraining unit 124 according to the present embodiment prepares the feature amount space so as to determine the unknown class and assigns the pseudolabel also to the unknown class based on the situation of the pseudolabels of the other classes to use in the retraining. Thus, the retraining may be performed for realizing more accurate automatic accuracy recovery.

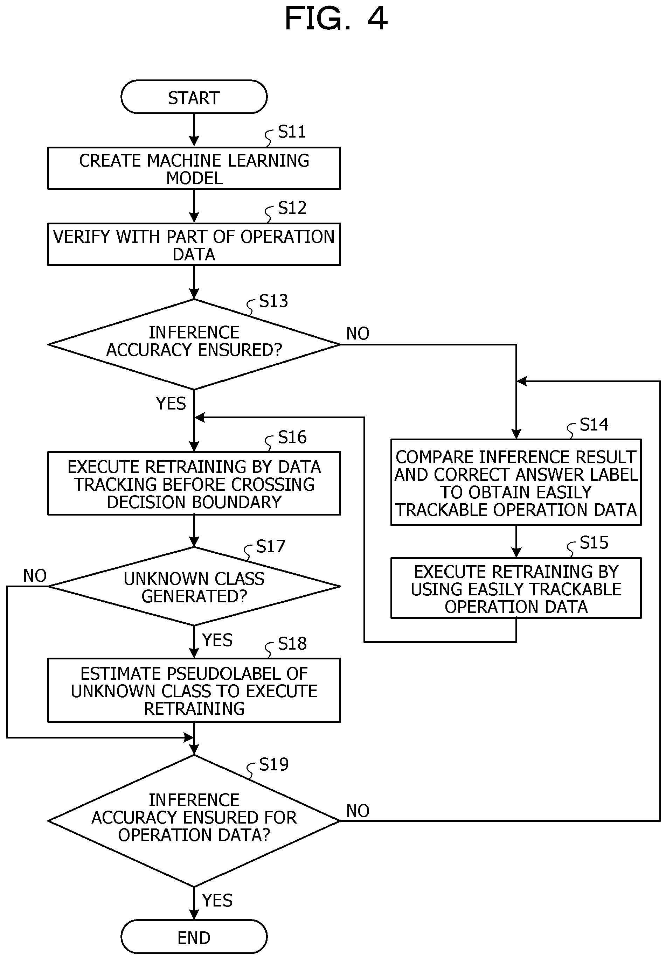

FIG. 4 is a flowchart of an automatic accuracy recovery process for the machine learning model performed by the machine learning apparatus according to the embodiment. Referring next to FIG. 4, a flow of the automatic accuracy recovery process for the machine learning model performed by the machine learning apparatus 1 according to the embodiment will be described.

The learning model creation unit 111 of the machine learning unit 11 creates the machine learning model by performing training by using the training data 30 (step S11). The inference unit 112 performs inference on the operation data 40 by using the machine learning model created by the learning model creation unit 111. During this time, the pseudolabel generation and retraining unit 124 of the automatic recovery unit 12 performs retraining with the data tracking before crossing of the decision boundary and performs the automatic accuracy recovery of the machine learning model.

The verification unit 122 of the automatic recovery unit 12 obtains an inference result from the inference unit 112. The verification unit 122 obtains the correct answer label of part of the operation data 40 having undergone the inference. The verification unit 122 compares the correct answer label with the inference result of the part of the operation data 40 for which the correct answer label has been obtained and verifies the inference accuracy of the machine learning model (step S12).

The verification unit 122 determines whether a sufficient inference accuracy is ensured for the operation data 40 (step S13). In a case where the inference accuracy is ensured (step S13: affirmative), the automatic accuracy recovery process for the machine learning model proceeds to step S16.

In contrast, in a case where the inference accuracy is not ensured (step S13: negative), the pseudolabel generation and retraining unit 124 compares the correct answer label and the inference result of the operation data 40 to obtain the easily trackable operation data (step S14).

Next, the pseudolabel generation and retraining unit 124 executes retraining by using the easily trackable operation data to update the operation data correspondence model 125 (step S15). Then, the automatic accuracy recovery process for the machine learning model proceeds to step S16.

The pseudolabel generation and retraining unit 124 executes retraining with the data tracking before crossing of the decision boundary and performs the automatic accuracy recovery of the operation data correspondence model 125 (step S16).

The unknown class detection unit 123 determines, by using the data group in the feature amount space generated by the pseudolabel generation and retraining unit 124, whether an unknown class is generated (step S17). In a case where the unknown class is not generated (step S17: negative), the automatic accuracy recovery process for the machine learning model proceeds to step S19.

In contrast, in a case where the unknown class is generated (step S17: affirmative), the pseudolabel generation and retraining unit 124 estimates the pseudolabel of the unknown class detected by the unknown class detection unit 123 and executes retraining by using each class in the data space including the unknown class (step S18).

Then, the verification unit 122 determines whether a sufficient inference accuracy is ensured for the operation data 40 (step S19). In a case where the inference accuracy is not ensured (step S19: negative), the automatic accuracy recovery process for the machine learning model returns to step S14.

In contrast, in a case where the inference accuracy is ensured (step S19: affirmative), the automatic recovery unit 12 ends the automatic accuracy recovery process for the machine learning model.

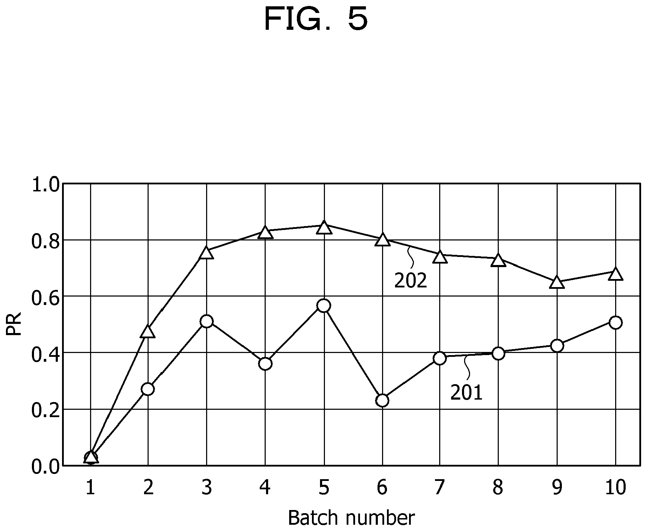

FIG. 5 is a diagram illustrating a comparison of precision recall (PR) curves on a batch-by-batch basis. FIG. 5 illustrates precision (PR) on the vertical axis and batches on the horizontal axis. A curve 201 illustrated in FIG. 5 is a PR curve in a case where retraining with the data tracking before crossing of the decision boundary. A curve 202 is a PR curve in a case where retraining is performed by using the easily trackable operation data. Here, the correct answer label is provided up to the second batch, and after that, retraining was performed for each batch.

As indicated by the curve 201, in a case where the retraining with the data tracking before crossing of the decision boundary is repeated without performing the retraining by using the easily trackable operation data, the inference accuracy is degraded. In contrast, as indicated by the curve 202, when the retraining by using the easily trackable operation data is performed, the inference accuracy is recovered and a sufficient inference accuracy is ensured. For example, it may be understood that, in the retraining by using the easily trackable operation data according to the present embodiment, the automatic recovery may address, by performing the retraining based on, for example, the selection of effective additional data and the estimation of the unknown class, even a relatively large change in the operation data 40.

As described above, the machine learning apparatus according to the present embodiment generates the machine learning model, performs inference, and performs retraining of the machine learning model with the data tracking before crossing of the decision boundary to perform the automatic accuracy recovery of the machine learning model. In the case where accuracy degradation of the machine learning model occurs due to a large change in the operation data, the machine learning apparatus according to the present embodiment performs the retraining by using the operation data able to be correctly answered by the inference as the easily trackable operation data. The machine learning apparatus according to the present embodiment detects the unknown class, assigns the pseudolabel to the detected unknown class to use in the retraining. In this case, the operation data able to be correctly answered by the inference is used for the retraining while the operation data not able to be correctly answered by the inference is excluded. Thus, the number of additional correct answer labels used for the retraining may be decreased and the inference accuracy may be automatically recovered even in the case of a large change in the operation data. When the unknown class for the retraining is used, applicability to new data may also be improved. Accordingly, robustness against changes in data may be provided more, change patterns of the operation data able to be addressed may increase, and an application range of the automatic accuracy recovery of the machine learning model may be increased. Accordingly, the inference accuracy of the machine learning model may be improved.

### (Hardware Configuration)

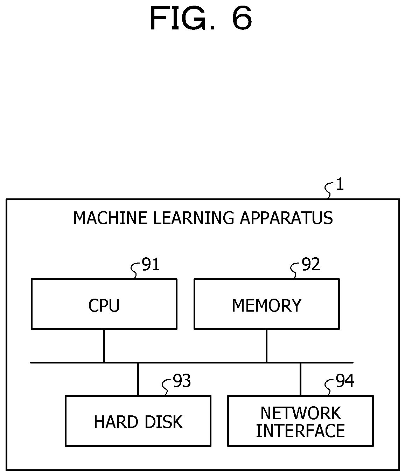

FIG. 6 is a hardware configuration diagram of the machine learning apparatus. The machine learning apparatus 1 according to the present embodiment has, for example, a hardware configuration x illustrated in FIG. 6. For example, the machine learning apparatus 1 includes a central processing unit (CPU) 91, a memory 92, a hard disk 93, and a network interface 94. The CPU 91 is coupled to the memory 92, the hard disk 93, and the network interface 94 via a bus.

The network interface 94 is an interface for communication between the machine learning apparatus 1 and an external device. For example, the network interface 94 relays communication when a CPU 91 reads the training data 30 and the operation data 40 placed in the external device.

The hard disk 93 is an auxiliary storage device. The hard disk 93 stores, for example, the operation data correspondence model 125. The hard disk 93 also stores various types of programs including a program for realizing the functions of the control unit 10 including the machine learning unit 11 and the automatic recovery unit 12 exemplified in FIG. 1.

The memory 92 is a main storage device. For example, dynamic random-access memory (DRAM) may be used as the memory 92.

The CPU 91 reads the various types of programs from the hard disk 93, loads the programs into the memory 92, and executes the programs. Thus, the CPU 91 may realize the functions of the control unit 10 including the machine learning unit 11 and the automatic recovery unit 12 exemplified in FIG. 1.

## Claims

1. A machine learning program comprising instructions which, when the machine learning program is executed by a computer, cause the computer to execute processing, the processing comprising:
clustering a plurality of pieces of data based on a plurality of feature amounts of the plurality of pieces of data obtained by inputting the plurality of pieces of data to a machine learning model, the clustering being performed under a condition that permits classification into a plurality of groups which are used as a correct answer label of training data and an other group which is not used as the correct answer label;
generating the training data in which the correct answer label is assigned to the plurality of pieces of data based on a result of the clustering; and
executing training of the machine learning model based on the generated training data.

2. The machine learning program according to claim 1, wherein
the generating includes generating the training data by using, out of the plurality pieces of data, correct answer data output of which in a case of being input to the machine learning model matches the result of the clustering.

3. The machine learning program according to claim 1 or 2, wherein
the machine learning model is generated based on a parameter of an other machine learning model, and
the plurality of groups are groups of classification results output by the other machine learning model for input data.

4. The machine learning program according to any one of claims 1 to 3, the processing further comprising:
determining an other correct answer label for the other group based on the correct answer label assigned to the plurality of groups and assigning the other correct answer label having been determined.

5. The machine learning program according to any one of claims 1 to 4, the processing further comprising:
verifying inference accuracy based on output of the machine learning model in a case where the plurality of pieces of data are input, wherein
the training is executed in a case where the inference accuracy becomes smaller than or equal to a threshold.

6. A computer-implemented method of performing machine learning processing, the method comprising:
clustering a plurality of pieces of data based on a plurality of feature amounts of the plurality of pieces of data obtained by inputting the plurality of pieces of data to a machine learning model, the clustering being performed under a condition that permits classification into a plurality of groups which are used as a correct answer label of training data and an other group which is not used as the correct answer label;
generating the training data in which the correct answer label is assigned to the plurality of pieces of data based on a result of the clustering; and
executing training of the machine learning model based on the generated training data.

7. A machine learning apparatus comprising:
a control unit configured to perform processing, the processing including:
clustering a plurality of pieces of data based on a plurality of feature amounts of the plurality of pieces of data obtained by inputting the plurality of pieces of data to a machine learning model, the clustering being performed under a condition that permits classification into a plurality of groups which are used as a correct answer label of training data and an other group which is not used as the correct answer label;
generating the training data in which the correct answer label is assigned to the plurality of pieces of data based on a result of the clustering; and
executing training of the machine learning model based on the generated training data.
